# EUROPEAN PATENT SPECIFICATION

(11) **EP 0 739 388 B1**
(45) Date of publication and mention of the grant of the patent: **08.03.2000**
(21) Application number: 95905622.7
(22) Date of filing: 11.01.1995
(51) Int. Cl.: C09C 1/40

(54) **SYNTHETIC ZEOLITE PIGMENTS**
SYNTHETISCHE ZEOLITHPIGMENTE
PIGMENTS ZEOLITIQUES SYNTHETIQUES

(30) Priority: 13.01.1994 GB 9400580
(43) Date of publication of application: 30.10.1996
(73) Proprietor: CROSFIELD LIMITED, Warrington, Cheshire WA5 1AB (GB)
(72) Inventor: CARR, Stuart, William, Liverpool L17 7PQ (GB); HOLLWAY, Florence, Merseyside L46 9RX (GB)
(74) Representative: Collingwood, Anthony Robert
(86) International application number: EP9500099
(87) International publication number: WO9519396

(56) References cited:
- DE-A- 221 344
- PATENT ABSTRACTS OF JAPAN vol. 4 no. 7 (C-070) ,19 January 1980 & JP,A,54 142238 (TOYO SODA) 6 November 1979,
- DATABASE WPI Week 9209 Derwent Publications Ltd., London, GB; AN 92-071137 & SU,A,1 638 147 (AS ARMN. GEN. INOR. CH.) cited in the application

## Description

### FIELD OF THE INVENTION

This invention relates to synthetic zeolite pigments and more particularly to novel synthetic zeolite pigments and processes for their preparation. The new pigments are characterised by their chemical composition and x-ray powder diffraction pattern, and exhibit a variety of useful properties such as adsorption of foreign molecules and ion exchange behaviour, as well as having characteristic colours.

### BACKGROUND OF THE INVENTION AND PRIOR ART

Zeolites constitute a family of microporous crystalline aluminosilicates. Currently there are known over thirty natural zeolite minerals and more than fifty synthetic zeolite minerals. The framework of these structures consists exclusively of tetrahedral oxides of aluminium and silicon, though other atoms which form tetrahedral coordination with oxygen have also been reported (Szostak, Molec. Sieves, 1989; Breck, Zeo. Mol. Sieves, 1974). As the charge on the framework is anionic, cations are located within the cavities and channels in the structure to balance the framework charge. A unique feature of the zeolites is that the cations which are located in the cavities and channels can be exchanged by other cations through an ion exchange process. The size of these channels and cavities is greater than 2.5 Å which allows molecules such as water and oxygen to be adsorbed. This adsorption is generally reversible.

Every zeolite can be defined by its chemical composition and unique x-ray powder diffraction pattern which defines the framework topology or structure. Both composition and structure, as identified by the x-ray powder diffraction pattern, are necessary to fully define a zeolite material.

Though each framework topology is unique, structures can be classified by building units which compose the topology. Zeolites can sometimes be classified by these building units (see D. W. Breck, Zeo. Mol. Sieves, 1974; W. Meier and D. H. Olson, Atlas of Zeolite Structure Types, Revised Edition 1992). The beta cage, for example, is a known structural unit for a number of zeolite topologies, including type A, faujasite, EMC-2, ZK-5, and rho.

X-ray powder diffraction is a well known and accepted method of identifying unique crystal structures. Chemical composition can alter the position and intensities of the diffraction lines by small amounts, but it is in general considered to be a structure characterisation technique independent of composition and is frequently used as a fingerprint technique to identify aluminosilicate framework topologies (J. B. Higgins, Compilation of Simulated X-ray Powder Diffraction Patterns of Zeolites, 1989).

Many zeolites have both unique chemical compositions and diffraction patterns, but some may have similar compositions or diffraction patterns that differ in the other required parameter. For example, the zeolite identified as Linde Type A has a chemical composition of Na₂O.Al₂O₃.2SiO₂.4.5H₂O and a unique x-ray powder diffraction pattern, while the zeolite identified as zeolite alpha has a similar x-ray powder diffraction pattern but a chemical composition of (Na,TMA)₂O.Al₂O₃.4.8SiO₂.7H₂O. Zeolites beta and ZSM-5 have the same chemical composition but differ greatly in their x-ray powder diffraction patterns. Zeolites Y and ZSM-20 have similar chemical compositions and x-ray powder diffraction patterns which contain many of the same lines, though it is the respective x-ray diffraction patterns taken as a whole which characterise the two different materials. Thus, the fact that the ZSM-20 material has an x-ray powder diffraction pattern which contains extra lines compared with that of the Y-type material means that it is structurally a different material, and indeed is defined and patented as such; see for example US 3972983 (ZSM-20) and US 3130007 (zeolite Y).

Other properties which are representative of zeolites include their well-defined particle size. It is well known that zeolites have a particle size typically ranging between about 0.1 and 300 microns. What makes the zeolites unique from other aluminosilicates, however, is their adsorption and ion exchange properties. Adsorption of molecules such as water, oxygen, n-hexane and cyclohexane is dependent upon the structure of the material as well as its composition. For example, zeolite type A exhibits different adsorption properties depending upon the nature of the exchange cation: Ca²⁺ exchanged type A zeolite adsorbs water, oxygen and n-hexane while Na⁺ exchanged type A zeolite adsorbs water and oxygen only. K⁺ exchanged type A zeolite adsorbs water only.

The mineral lapis lazuli, a natural pigment known for centuries, is noted for its brilliant blue colour, permanence and alkaline stability. The synthetic analogue is better known as ultramarine blue. Uses for these materials include printing inks, textiles, rubber, artists' colours, plastics, cosmetics, paints and laundry blue. Ultramarine is considered to be non-toxic and has been approved by the US Food & Drug Administration (FDA) for food packaging. The structure of this mineral and synthetic analogue is based on the sodalite framework topology. The x-ray powder diffraction pattern data of the synthetic material as commonly commercially available (e.g. as described for example in Kirk Othmer, Encyclopaedia of Chemical Technology, 3rd Edition (1982), Volume 17, p. 827 (Publd. John Wiley & Sons) is shown in Table 1 of the accompanying tables. These materials are crystalline sulphur containing sodium aluminosilicates with a definite structure as defined by their x-ray powder diffraction pattern. Although the known ultramarines contain charge balancing cations located within the structure, these materials normally do not exhibit appreciable adsorption or ion exchange properties, because of the high density of their structure and the smallness of the pores therein.

The ultramarines are typically prepared using clay, a sodium source, a carbon source and a sulphur source, which are mixed together and calcined, first under reducing conditions (yielding ultramarine green), then under oxidising conditions (yielding ultramarine blue). Commercially, very high temperatures, typically in excess of 750°C, and times of the order of several hours to weeks are required to complete the synthesis. Examples of disclosures of such processes include United States Patents Nos 2441950 and 2544695. Also to be mentioned are United States Patents Nos 2535057, 2544693 and 2759844, which disclose the production of ultramarine blue from a synthetic crystalline aluminosilicate with the sodalite structure. Representative treatment in these references include calcination under non-oxidising conditions at 600°C or higher, preferably from about 740 to 900°C (which yields ultramarine green), then under oxidising conditions, e.g. with sulphur dioxide, at about 500 to 800°C (which yields ultramarine blue). Disclosed temperatures and other conditions vary slightly from reference to reference.

SU-A-1638147 (1991) discloses the preparation of what is said to be ultramarine blue pigment, by subjecting a mixture of type P zeolite, soda, sulphur and carbon black (as reducing agent) to a multi-stage heat treatment, comprising heating for 50-60 minutes at 380-400°C, then for 120-150 minutes at 690-710°C, and then for 50-60 minutes at 450-480°C. In the highest temperature heating step of this process, however, the P-type structure of the zeolite is believed to break down.

A wide range of particle sizes, e.g. from about 0.5 to about 100 microns, are encountered in synthetic ultramarine blue as produced by the above known methods. Thus, crushing, grinding or other size separation of the product is required in order to obtain particles of pigment of preferred size, e.g. not more than about 5 or 10 microns.

Known, commercially available ultramarine pigments also have limited ranges of colour. They are generally based on a sodalite structure and only rarely exhibit significant adsorption of foreign molecules and ion exchange.

JP-A-049968 (1978) discloses a process for making ultramarine blue from a synthetic zeolite of type A, X or Y, preferably type A, having a particle size of 1 to 5 microns. The starting materials, which include sodium pentasulphide and optionally a reductive material as well as the zeolite, are calcined in a nitrogen atmosphere at 600 to 900°C, preferably 750 to 850°C, for up to four hours, yielding ultramarine green. The ultramarine green is heated in a sulphur dioxide atmosphere at 500°C for one hour, yielding ultramarine blue. The x-ray powder diffraction pattern, which is shown in Table 1, corresponds largely to that of the commercial ultramarine blue based on the sodalite structure. It is well known in the literature that zeolites of type A structure can convert to the sodalite structure via a solid state transformation in the presence of sodium salts at high temperatures.

JP-B-047222 (1981) discloses the preparation of an ultramarine blue pigment which exhibits an x-ray powder diffraction pattern containing five strong lines corresponding to 7.14 Å, 4.11 Å. 3.72 Å, 3.30 Å and 3.00 Å spacing, two medium strength lines at 4.36 Å and 3.42 Å spacing and one weak line corresponding to 5.05 Å spacing. This diffraction pattern is listed in Table 1. The crystal system is identified as cubic with a lattice constant of what is stated to be 123 Å. The blue pigment was prepared by mixing zeolite type A with an alkali metal sulphide A₂Sₓ, where A is the alkali metal and x is greater than 1, and heating the material at a temperature from 300 to 600°C in a non-oxidising atmosphere, then heating the resultant yellow/green product in an oxidising atmosphere at a similar temperature, yielding the final blue pigment. As in JP-A-049968 (1978) referred to above, the use of alkali metal sulphide or polysulphide such as sodium pentasulphide is disadvantageous, as it is difficult to make (requiring preparation at high temperature), and is air and moisture sensitive.

US 2723917 (1955) discloses a process for making ultramarine pigments using a similar two-stage method as in the two Japanese prior art references mentioned above, but in which the second, oxidative step is carried out using a mixture of air and water vapour as the oxidising agent. Temperatures of from about 100°C to about 550°C, preferably 250-300°C, are used for the second oxidative step of the process.

A feature common to the above known processes for preparing synthetic zeolite pigments is that the second, oxidative heating step is carried out on the dry, solid intermediate product at relatively high temperature in a gaseous oxidising atmosphere. This necessitates the use of expensive and specialized hardware, which, if not provided separately from the hardware used to conduct the first heating step in a non-oxidising atmosphere, means that a single apparatus can only operate at a maximum of around half its potential efficiency. Frequently, like the first heating step, the second heating step may be relatively lengthy, particularly if lower temperatures are used, and also because of the high temperatures needed to carry out the process it is expensive and necessitates considerable safety precautions.

### SUMMARY OF THE INVENTION

We have now found a novel process for preparing synthetic zeolite pigments which ameliorates or even avoids many, if not all, of the above-mentioned disadvantages. The pigments produced by the novel process are novel materials, characterised by chemical composition and x-ray powder diffraction pattern, and they exhibit advantageous properties such as adsorption of foreign molecules, ion exchange and characteristic colours.

Accordingly, in a first aspect the present invention provides a process for preparing a synthetic zeolite pigment, comprising:
(a) heating a mixture comprising crystalline aluminosilicate zeolite and sources of each of sulphur, cations and optionally a reducing agent, under non-oxidising conditions at a temperature at which the zeolite substantially retains its framework structure, preferably at a temperature of between about 300 and about 600°C;
(b) contacting the product of step (a) with an oxidising agent in the presence of a solvent or carrier at a temperature of up to about 300°C preferably up to about 150°C; and
(c) recovering therefrom a synthetic inorganic zeolite pigment.

If a reducing agent is present, which may depend on the identity of the sulphur source, as described further below, then a preferred reducing agent is a source of carbon, though other reducing agents are possible within the scope of this embodiment. The sulphur of the sulphur source may be replaced wholly or in part by selenium or other non-metallic element and as used in the present context throughout this specification, the term "sulphur source" is to be read as encompassing this possibility.

The inorganic pigment resulting from the first, non-oxidising, heating step may for example have a colour corresponding to that of ultramarine green though the colour may vary depending upon the reaction conditions and the chemical composition, eg. it may be yellow, brown, red, etc., whereas the pigment recovered after the second, oxidising step will generally be of a colour corresponding to that of ultramarine blue. The latter pigment is a novel material, evidenced by its unique chemical composition and x-ray powder diffraction pattern.

In a second aspect, therefore, the present invention provides a novel synthetic zeolite pigment having a composition expressed in moles of element or oxide, per mole of alumina based on the anhydrous basis as follows:
M_{(x/n})(AlO₂)ₓ(SiO)_{y}M'_{(z/n'w)}.zS
wherein: each of M and M' is a cation and M and M' may be the same or different cationic species; n and n' are the respective valences of M and M' and each independently preferably has a value of from 1 to 5, preferably 1 or 2; y/x is at least about 0.7, preferably from about 0.7 to about 4; w is from about 0.6 to about 6, preferably from about 1 to about 5; and z is from about 0.8 to about 8, preferably from about 2 to about 5, said pigment having an x-ray powder diffraction pattern substantially as shown in any one of Tables 2 to 6 herein.

Within the above compositional definition, trace amounts of other anions, e.g. chloride, sulphate, may be present. In the above formula S may be replaced wholly or in part by selenium or other non-metallic element and as used in the present context throughout this specification, the term "sulphur" is to be read as encompassing this possibility. Each of M and M' is preferably a metal cation, especially of an alkali metal or alkaline earth metal, though other cations, e.g. of transition or main group elements, are possible for either or both of M and M'.

These novel pigments may be based on various zeolite structure types, especially A, X or Y type zeolites. Type A is particularly preferred.

The synthetic zeolite pigments of the above composition in accordance with the invention have characteristic x-ray powder diffraction patterns which further define these novel pigments of the invention. In presently preferred embodiments, the pigments have characteristic x-ray diffraction patterns substantially as shown in any one of Tables 2 to 6 of the accompanying tables, which show the diffraction patterns of various A-type and X-type zeolite pigments in accordance with the invention, as prepared in various of the Examples hereinbelow. The values of d spacings and/or relative intensities of the lines given in the tables may vary by small amounts from the values quoted, as will be appreciated by persons skilled in the art.

Pigments in accordance with this aspect of the invention may be of a variety of colours, eg. yellow, brown, pink, green, blue, though the latter two colours are typical when the invention is practised in its typically simplest form. Other colours as mentioned above, and even other different colours, are possible, particularly when one or more species of cation in the normal zeolite structure (i.e. M cations) are partially or wholly replaced with different cations (M') either by use of a cationically modified zeolite starting material or by using other particular reactant starting materials and/or when a different zeolite type structure is used initially.

### DETAILED DESCRIPTION OF THE INVENTION AND PREFERRED EMBODIMENTS

Preferred embodiments of the various aspects of the invention will now be described in detail. In the accompanying tables, which follow the Examples further below and which have already been referred to:
Table 1 shows x-ray powder diffraction patterns of the following prior art materials: a type 4A zeolite as used as the starting material in a preferred process according to the invention; conventional commercially available ultramarine blue pigment (as described in the Kirk Othmer reference referred to above)); the blue ultramarine pigment prepared as disclosed in JP-A-049968 (1978); the blue pigment prepared as disclosed in JP-B-047222 (1981); and
Tables 2 to 6 each show the x-ray diffraction pattern of a particular synthetic zeolite pigment in accordance with the invention, as prepared by Examples 1, 2, 3, 6 and 7 respectively, hereinbelow.

As used herein, the symbols M, M', n, n', w, x, y and z have the same meanings throughout.

In the first step of the process of the invention, which may be carried out as a single batch process or as a series of discrete steps, the particle size of the intermediate zeolite pigment product is generally substantially the same as that of the initial zeolite starting material, as determined for example by scanning electron microscopy. This same particle size can be carried through the second, oxidative step of the process, thereby producing a final zeolite pigment having substantially the same particle size as the zeolite starting material. This retention of well-defined particle size and morphology from starting material to product is a particularly advantageous feature in the context of compositions such as cosmetics which are formulated with other ingredients, because different pigments of the invention can be utilised without having to reformulate the base composition to take account of differences in particle size and other physical properties of such different pigments. In preferred embodiments of the invention the particle size of the recovered pigment may vary over the whole of the known range for zeolite-type pigments and may depend upon the desired end use of the pigment in question. For example, pigments for use in cosmetics may demand a relatively small, well-defined particle size. Typical average particle sizes of pigments of the invention may be for example 2 to 5 µm for type A structures, 1 to 5 µm for type X structures and 0.1 to 2 µm for type Y structures.

In the process of the invention, the starting materials for preparation of the novel zeolite pigments comprise a (preferably synthetic) crystalline aluminosilicate zeolite and sources of each of sulphur and additional cations, the latter preferably being in addition to the cation(s) supplied by the zeolite. The starting materials preferably further comprise a reducing agent, for example, and preferably, a source of carbon, the need for which may depend upon the identity of the sulphur source used.

The synthetic crystalline aluminosilicate zeolite which is the starting zeolite may preferably be a type A, X or Y type zeolite (or even a mixture of two or more such materials). In the context of this invention and as used herein, these defined zeolite types are to be construed as encompassing other zeolites which have corresponding related structures, as will be readily understood by persons skilled in the art, for example alpha or other zeolite having a tetrahedral crystal structure, pores of uniform size and an Si/Al atomic ratio of greater than about 0.7 (which corresponds to a SiO₂/Al₂O₃ mole ratio of greater than about 1.4). Particularly preferred as the starting zeolite is a type A zeolite, and especially a type 4A zeolite (which is a type A zeolite in the sodium form). Type A zeolites are described for example in United States Patent No. 2882243, the disclosure of which is incorporated herein by reference. Their nominal composition, in terms of metal oxides on the anhydrous basis, may be given as Na₂O.Al₂O₃.2SiO₂. More broadly, the Si/Al atomic ratio may vary from about 0.7 to about 1.2. The x-ray powder diffraction pattern of the type 4A zeolite as described in US 2882243, which is suitable as the starting zeolite in the process of the present invention, is shown in Table 1. The starting zeolite material may be hydrated or anhydrous (hydrated is preferred).

The source of sulphur used in the process of the invention is preferably a reducible sulphur source, for example elemental sulphur, which may be in any of its normal physical phases. Other reducible sulphur sources include reducible sulphur-containing salts, for example sodium thiosulphate or sodium sulphite, and polysulphides. Alternatively, the sulphur source may be a non-reducible sulphur source, such as a sulphide, particularly of an alkali metal, for example sodium sulphide. Elemental sulphur is, however, the most preferred sulphur source, owing to its ease of preparation and handling and lower cost.

In the invention, the optional reducing agent is preferably a source of carbon, for example a carbon-containing salt such as sodium acetate, which material has the additional advantage of simultaneously being a source of additional sodium. In general, however, any oxidizable carbon compound, such as elemental carbon e.g. coke or charcoal, may be used as the carbon source. Mixtures of carbon sources, such as a mixture of sodium acetate and sodium citrate, may be used if desired. The presence of the reducing agent in the starting materials is generally necessary when the source of sulphur is other than an oxidisable sulphur containing compound such as a sulphide.

As mentioned above, the source of additional cation (corresponding to M' in the above-defined formula), preferably metal cation and particularly alkali metal or alkaline earth metal cation or even a combination of the two, may conveniently be provided by the same material as is the source of carbon as the preferred reducing agent, if present. However, if desired a separate cation source may be used, for example a simple salt such as a chloride, e.g. sodium chloride. Although it is preferred that the synthetic zeolite pigment of the invention contains an alkali metal and/or alkaline earth metal as the additional cation, it is possible for one or more other cations to be used in the starting material either in place of or in addition to the above mentioned preferred cations. Suitable alternative cations include those of various transition or main group elements, e.g. heavy metals, such as zinc, copper. The use of such other cations in the starting material may enable a pigment of a particular desired colour to be produced directly, without the need for subsequent ion exchange following the main preparative steps; as is described further below.

The amounts of each of the starting materials used in the process of the present invention may vary, and will in general be able to be selected in accordance with prior teaching in the art and the general knowledge of the skilled person. The amount of the sulphur source is especially preferably at least enough to generate the desired colour and/or intensity of colour in the final pigment product. If present, the quantity of the reducing agent is generally at least enough to reduce the sulphur source. The quantity of additional cation source is also preferably at least enough to give the desired quantity of that component in the final product for colour purposes and charge balance dependent upon the amount of sulphur present. Small excess quantities of starting materials other than the zeolite are generally not detrimental, since they are preferably mostly volatilised during processing, and excess cations may be washed out during the second, oxidative step of the process or during product recovery. Generally, the mixing ratios of the starting materials are selected so as to give a pigment product having the preferred elemental composition as defined hereinbelow.

In a preferred first step of the process according to the present invention, the starting materials are mixed together to form an intimate dry mixture, which is charged to a heating vessel as is well known in the art, such as a lidded crucible or an open vessel. The starting mixture is then heated in a non-oxidising atmosphere until the contents of the vessel attain the required temperature, which may typically be for example between about 300 and about 600°C. More preferably, the temperature of this first heating step is between about 350 and about 550°C. Generally, the heating temperatures should be one at which the zeolite substantially retains its original framework structure, i.e. the heating temperature should be below that at which the zeolite undergoes a significant change in its framework structure. A process for preparing synthetic zeolite pigments comprising such a heating step is the subject of our copending United Kingdom patent application No. 9400574.7 dated 13th January 1994, the content of which is incorporated herein by reference. The non-oxidising atmosphere may be provided by flowing inert gas such as nitrogen or a noble gas, e.g. argon, or alternatively a vacuum. The heating may be rapid, for example achieved by placing the crucible directly in a preheated furnace, or it may be ramped to the required temperature within a reasonable period of time which may typically be between about 10 minutes and one hour.

The time needed for the transformation of the zeolite starting material to occur will generally be dependent upon the temperature at which the reaction is carried out. Lower temperatures will usually require longer reaction times; for example, samples heated at 350°C may require more than six hours before the reaction is completed, while for samples heated to 550°C, the reaction may be complete by the time that temperature is reached. Whilst not intending to be limited by theory, during the reaction it is believed that reduced sulphur (either as such from the sulphur source used or from the reduction thereof by the reducing agent, if used,) is incorporated into the zeolite crystal structure, although the exact amount and form of sulphur so incorporated is not entirely certain.

The above heating step in the non-oxidising atmosphere may if desired be conducted in two stages: firstly the sulphur is adsorbed into the zeolite channels under mild heating at temperatures which mobilise the sulphur, and secondly the carbon reducing agent (if used) and additional cation sources are added preferably with mixing and the final reaction temperature attained and maintained as mentioned above for as long as it takes to obtain the desired product.

In accordance with the present invention, the second, oxidative step which characterises the process comprises contacting the product of the first heating step with an oxidising agent in the presence of a solvent or carrier at a temperature of up to about 300°C, preferably up to about 150°C. Preferably the solvent or carrier is in the form of a liquid medium at the temperature at which the oxidative process step is carried out.

Generally, the solvent or carrier should be compatible with the material or materials subjected to the oxidative process step; that is to say, the material(s) (especially the zeolite) should not react chemically with or be structurally (or otherwise physically) altered by the presence of the solvent or carrier.

Preferably, this step of the process is carried out in an aqueous medium, for example by suspending or otherwise dispersing the intermediate product in water (with or without any other components which may be necessary or desired for the process). Any other suitable solvent or carrier may be used however, for example known organic solvents, oils, etc. Mixtures of solvents/ carriers may be used if desired.

Preferably the medium in which the oxidative step is carried out has a pH of at least about 6 or 7.

The temperature of the reaction may suitably be in the range of from about -20 to +150°C, even more preferably from about 20 to 110°C. The reaction time may vary, depending for example on the temperature and/or the identity of the solvent/carrier and the oxidising agent, but generally the reaction is continued, e.g. by refluxing, for as long as it takes to effect the desired colour change in the product. Suitable reaction times may for example be of the order of several minutes, e.g. 10 minutes, up to 1 or 2 hours or possibly longer, e.g. up to about 10 hours or more.

Any suitable oxidising agent may be used for this step of the process, and may be either present in solution in the aqueous (or other solvent) medium or passed through it as a gas. A preferred oxidising agent is oxygen, e.g. in the form of air bubbled through the solution in which the reaction is performed. Other suitable oxidising agents include for example sulphur dioxide, ozone, nitrogen oxides, peroxy acids, peroxides, halogen salts and mixtures of such materials.

Once the above oxidative step of the process is complete, the final pigment product may be cooled to ambient temperature (if necessary), followed by recovery by filtration, centrifuging or the like and conventional water washing and drying. In particular, washing may be advantageous for removing excess reagents and other unwanted material, depending on for example the reaction stoichiometry and/or conditions. In preferred embodiments, the resulting product is a free-flowing powder needing no further processing before being put to its desired end use. In particular, since the particle size of the product is substantially the same as that of the starting zeolite, there is generally no need for any size separation or other particle size reduction step. Of course, such additional processing may still be carried out if desired or if necessary.

In a particularly preferred embodiment of the two-step process of the invention using a type 4A zeolite as the starting zeolite, the final product has a brilliant blue colour and a characteristic x-ray powder diffraction pattern substantially as shown for example in either of Tables 2 or 3, the uniqueness of which (and of other characteristic diffraction patterns shown in other tables herein) establishes the novelty of this material per se and of other pigments prepared in accordance with the invention.

Preferred synthetic zeolite pigments according to the present invention have intense colours over principally the visible region of the electromagnetic spectrum. These colours show good thermal and light stability. Good stability under alkaline conditions is also observed. Colours differ from one another depending on the composition and type of starting zeolite and other starting materials, as well as the reaction conditions of the various steps of the preparative process.

As already mentioned above, the colour of the resulting pigment can for instance be controlled by appropriate selection of the identity and relative amount of additional cations (M') included in the starting materials. The additional cations may be the same or different from the cations (M) provided by the starting zeolite and by for example selecting an appropriate proportion of other different cations provided by the additional cation source, it is possible to obtain a final product having a desired characteristic colour.

As one example, particular other cations may be introduced by being incorporated into the starting zeolite material itself which is subjected to the process steps of the invention. In this case it may or may not be necessary to include in the other starting materials a separate source of cations. If the latter is not employed (by virtue of the additional cations being present in a cationically modified zeolite starting material), then that modified zeolite constitutes the said source of cations defined in the process of the invention, as well as the zeolite starting material itself. For example, inclusion of zinc cations in the zeolite structure can generate a pink coloured product, those zinc cations being introduced for example by employing a partially zinc-substituted sodium A-type zeolite as the zeolite starting material.

As another example, particular other cations may be introduced by being incorporated in one or more of the starting materials other than the zeolite. Carbon containing salts (or other reducing salts) of the appropriate metal cation (eg. the metal acetate) as the optional reducing agent and/or the appropriate metal sulphide, polysulphide or other sulphur containing salt as the sulphur source are preferred. The metal whose cations are to be incorporated may possibly be used in elemental form in the starting mixture.

As a further example, product pigments of different colours may be obtained by using zeolite starting materials having a particular selected structure, for example by using an X, Y or other faujasite type zeolite instead of the preferred A type.

As an alternative to controlling the colour of the final pigment product by selection of the appropriate starting materials, it is possible to change the colour of a given zeolite pigment prepared in accordance with the invention by use of an ion exchange step. Suitable methods for conducting ion exchange are well known in the art and described in the literature.

In an alternative post-preparation step for the purpose of changing the colour of a given prepared zeolite pigment, the material may be heated at a moderately high temperature, e.g. up to about 200°C, in an atmosphere of for example chlorine, hydrogen chloride or ammonium chloride vapour or other suitable reagent for a period of time sufficient to effect a desired colour change.

Pigments produced in accordance with the present invention are applicable to a wide range of uses such as those for which known zeolites have been found to be suitable. By way of example, zeolite pigments according to the invention are useful as colours for paints, cosmetics, personal products, detergents, paper and synthetic polymer materials. They may also be useful as catalysts for a variety of industrial processes, as adsorbents of foreign molecules for example sugars, fats, metals, oils, alcohols and the like and ion exchangers and as electronic materials, for example semiconductors.

Preferred embodiments of the present invention are further illustrated by the following Examples 1 to 7, which are not intended to limit in any way the scope of the claimed invention. The tables referred to in Examples 1 to 7 follow after the Examples.

Where given, x-ray diffraction data were collected using a Siemens D5000 automated diffraction system employing θ-2θ geometry and graphite monochromatised Cu K-alpha radiation. Diffraction data were recorded by step-scanning at 0.05 degrees of 2θ, where 2θ is the Bragg angle, and a counting time of 3 seconds for each step (sample identification) and 6 seconds for each step (crystallinity measurement). The interplanar spacings d were calculated in Angstrom units (Å) and the relative intensities of the lines I/Iₒ, where Iₒ is the intensity of the strongest lines, above background were derived with the use of a profile fitting routine. For unit cell measurement, crystalline silicon powder was added to the sample as an internal calibrant. The relative intensities are given in terms of the following symbols:

| | |
|---|---|
| vs = very strong | s = strong |
| ms = medium strong | m = medium |
| mw = medium weak | w = weak |
| vw = very weak | vvw = very very weak |

### Examples

### Example 1

A mixture of ground sulphur (9.2g) and ground anhydrous sodium acetate (3.3g) was added to hydrated 4A zeolite (5.7g). The complete raw material mixture was mixed with a mortar and pestle. The ground mixture was packed into a glass boat which was placed inside a tube furnace. This was purged of air under a flow of argon gas (0.25 l/hour) at ambient temperature, then heated in flowing argon until a temperature of 45°C was reached (approximately ½ hour). The furnace was maintained at this temperature for 1½ to 2 hours under flowing argon, then switched off and allowed to cool to ambient temperature under the argon flow.

The resultant material had a bright yellow-green colour at this stage.

A portion of the isolated yellow-green intermediate (3.1g) was suspended in water (200cm³ adjusted to pH 9.5 with NaOH) and heated under reflux with agitation. At the same time air was bubbled into the solution by means of a tube inserted into the side of the vessel such as to maintain a fully oxygenated mixture. This was continued for 16 hours. The product was isolated by filtration. The resultant zeolite pigment was deep blue and by x-ray diffraction was shown to be crystalline and have an x-ray powder diffraction pattern as shown in Table 2.

The pigment was analysed for sulphur, silicon, aluminium and sodium as follows:

For sulphur, the sample was subjected to fusion with sodium peroxide which converted all sulphur compounds to sulphates and simultaneously solubilised silica and aluminium. After acidification, dehydration of silica and filtration, the sulphate was precipitated as barium sulphate and finished gravimetrically.

For silicon and aluminium, the sample was fused in sodium carbonate and the silica dehydrated, filtered and finished gravimetrically with HF purification. The residue was fused, added back to the main solution and this solution analysed for aluminium by ICP spectroscopy.

For sodium, the sample was dissolved in a mixture of aqua regia and HF, fumed in perchloric acid and the sodium was determined by flame emission spectroscopy
The elemental composition was as shown below:

| Element | % (wt/wt) |
|---|---|
| Al | 12.7 |
| Si | 13.7 |
| Na | 13.4 |
| S | 11.8 |

### Example 2

The procedure of Example 1 was repeated except that the heating and oxygenation step was only continued for 2 hours. In this case a deep green pigment was isolated. The x-ray diffraction pattern showed the presence of a crystalline material with an x-ray powder diffraction pattern as shown in Table 3.

The pigment was analysed in the same manner as in Example 1. The elemental composition was as given below:

| Element | % (wt/wt) |
|---|---|
| Al | 13.4 |
| Si | 14.2 |
| Na | 13.5 |
| S | 14.1 |

### Example 3

The procedure of Example 1 was repeated using as the starting zeolite a type X zeolite prepared as described in Zeolites, Volume 7, 1987, pages 451-457, Kühl, G. This material had a Si/Al atomic ratio of 1.

14g of the isolated pale green intermediate X-type pigment was suspended in water (500cm³, adjusted to pH 9.5 with NaOH) and heated for 16 hours under reflux with agitation and oxygenation, as described in Example 1. The resultant pigment was pale blue, with an X-ray powder diffraction pattern as shown in Table 4.

### Example 4

This example illustrates the comparative ion exchange properties of the novel zeolite pigments of the invention and known ultramarines of the prior art.

Calcium ion exchange was performed for zeolite pigments of Examples 1 and 2 above and for known commercially available ultramarine blue and ultramarine violet pigments according to the following protocol: 0.1g (accurately weighed) aliquots of pigment previously equilibrated with atmospheric moisture at ambient temperature were contacted with 50 cm³ calcium chloride solution (made alkaline to pH 10 by addition of sodium hydroxide and containing 142 µg Ca per cm³) for 3 days. The solid was separated from the solution via centrifugation and filtration. Calcium concentration in the supernatant was analysed by ICPAES and the amount of calcium taken up by the pigment was calculated by difference. The following data were obtained:

| Sample | Temperature (°C) Calcium | Uptake (mgCa per 1 gram pigment |
|---|---|---|
| Example 1 | 24 | 48.1 |
| Example 2 | 80 | 53.0 |
| Ultramarine Blue | 24 | 0 |
| Ultramarine Blue | 80 | 7.5 |
| Ultramarine Violet | 24 | 0 |
| Ultramarine Violet | 80 | 2.0 |

### Example 5

This example illustrates the comparative porous nature of zeolite pigments of the present invention and known ultramarine blue of the prior art.

Adsorption measurements were conducted on the pigments of Examples 1 and 2 above and on known commercially available ultramarine blue utilising a standard McBain-Bakr gravimetric adsorption apparatus. The samples were activated by heating overnight in vacuum at 350°C.

The following data were obtained.

| Sample | Adsorbate | Temperature (°C) | Weight (wt/wt%) Adsorbed |
|---|---|---|---|
| Example 1 | H₂O | 24 | 12.9 |
| Example 2 | H₂O | 24 | 16.8 |
| Ultramarine blue | H₂O | 24 | 0.3 |

### Example 6

This example illustrates the preparation of blue pigment using hydrogen peroxide solution to effect the oxygenation step.

Yellow-green reduced pigment was prepared at 450°C under argon gas flow as described in Example 1. A portion of this isolated yellow-green intermediate (16.5g) was suspended in water (100cm³, adjusted to pH 10 with NaOH) with stirring to completely disperse the solid. Hydrogen peroxide solution (40g) was added and the mixture heated at 70°C. Over 20 minutes the pigment developed a bluish-green colour.

After cooling to ambient temperature the yellow supernatant liquid was decanted off. Water (50cm³, pH 10) and hydrogen peroxide (25g) were added and the mixture was further heated at 70°C with occasional stirring. After 1.5 hours the colour become turquoise.

More water (20cm³ pH 10) and hydrogen peroxide (25g) were added and heating continued. After 1.5 hours the pigment was medium blue and had an X-ray powder diffraction pattern as shown in Table 5.

The pigment was analysed in the same manner as in Example 1. The elemental composition was as given below:

| Element | % (wt/wt) |
|---|---|
| Al | 11.2 |
| Si | 12.7 |
| Na | 11.0 |
| S | 23.0 |

### Example 7

This Example illustrates the preparation of blue pigment using sodium hypochlorite solution to effect the oxidation step.

Yellow-green reduced pigment was prepared at 450°C under argon gas flow as described in Example 1. A portion of this isolated yellow-green intermediate (2.6g) was suspended in water (12.6g. adjusted to pH 9.5 with NaOH). The mixture was agitated to thoroughly disperse the solid, then sodium hypochlorite solution (14.5g) added and stirring continued. The mixture immediately became very warm and a colour change from dull yellow-green to bluish-green was observed after 5 minutes. More water (10g, pH 9.5) and sodium hypochlorite solution (10g) were added: the colour became turquoise.

The temperature was raised to 60°C with continuous stirring. After 20 minutes the pigment was pale blue and had an X-ray powder diffraction pattern as shown in Table 6.

**Table 1**

| Zeolite 4A (as described in US 2882243) | | Commercial ultramarine blue | | Blue pigment of JP-A-049968 (1978) | | Blue pigment of JP-B-047222 (1981) | |
|---|---|---|---|---|---|---|---|
| d(Å) | I | d(Å) | I | d(Å) | I | d(Å) | I |
| 12.29 | s | 7.14 | vvw | 6.43 | m | 7.14 | s |
| 8.71 | ms | 6.44 | m | 4.54 | vw | 5.05 | w |
| 7.11 | m | 4.55 | vw | 3.71 | vs | 4.36 | m |
| 5.51 | m | 4.03 | vvw | 2.87 | mw | 4.11 | s |
| 5.03 | vw | 3.93 | vvw | 2.62 | m | 3.72 | s |
| 4.36 | vw | 3.89 | vvw | 2.43 | vvw | 3.42 | m |
| 4.11 | m | 3.79 | vvw | | | 3.30 | s |
| 3.71 | ms | 3.71 | vs | | | 3.00 | s |
| 3.42 | w | 3.60 | vw | | | | |
| 3.29 | m | 3.41 | vvw | | | | |
| 2.99 | m | 3.35 | vvw | | | | |
| 2.90 | w | 3.30 | vvw | | | | |
| 2.754 | w | 3.19 | vvw | | | | |
| 2.688 | vw | 2.97 | vvw | | | | |
| 2.626 | m | 2.93 | vvw | | | | |
| 2.515 | vw | 2.88 | m | | | | |
| 2.464 | vw | 2.68 | vw | | | | |
| 2.371 | vw | 2.63 | m | | | | |
| 2.289 | vw | 2.43 | vvw | | | | |
| 2.249 | vw | | | | | | |
| 2.177 | vw | | | | | | |
| 2.144 | w | | | | | | |
| vs: very strong, s: strong, ms: medium strong, m: medium mw: medium weak w: weak, vw: very weak, vvw: very very weak | | | | | | | |

**Table 2**

| (Pigment of Example 1) | | |
|---|---|---|
| 2θ | d | relative intensity |
| 7.06 | 12.52 | m |
| 10.06 | 8.79 | mw |
| 12.36 | 7.16 | s |
| 15.94 | 5.57 | w |
| 17.60 | 5.04 | vw |
| 20.33 | 4.37 | mw |
| 21.66 | 4.10 | s |
| 23.85 | 3.73 | vs |
| 26.02 | 3.42 | w |
| 27.00 | 3.30 | vs |
| 29.86 | 2.99 | vs |
| 30.72 | 2.91 | w |
| 32.40 | 2.76 | w |
| 33.27 | 2.69 | w |
| 34.06 | 2.63 | s |
| 35.59 | 2.52 | w |
| 36.43 | 2.47 | mw |
| vs: very strong, s: strong, ms: medium strong, m: medium, mw: medium weak, w: weak, vw: very weak, vvw: very very weak | | |

**Table 3**

| (Pigment of Example 2) | | |
|---|---|---|
| 2θ | d | relative intensity |
| 7.15 | 12.35 | m |
| 10.09 | 8.76 | m |
| 12.43 | 7.12 | m |
| 16.06 | 5.51 | mw |
| 17.62 | 5.03 | w |
| 20.37 | 4.36 | mw |
| 21.28* | 4.17 | w |
| 21.62 | 4.11 | s |
| 23.90 | 3.72 | vs |
| 26.05 | 3.42 | w |
| 27.05 | 3.29 | vs |
| 29.84 | 2.99 | vs |
| 30.77 | 2.90 | w |
| 31.76* | 2.82 | w |
| 32.45 | 2.75 | mw |
| 33.29 | 2.69 | w |
| 34.09 | 2.63 | s |
| 35.63 | 2.52 | w |
| 36.41 | 2.47 | mw |

| | | |
|---|---|---|
| * lines due to impurity | | |
| vs: very strong, s: strong, ms: medium strong, m: medium, mw: medium weak, w: weak, vw: very weak, vvw: very very weak, | | |

**Table 4**

| (Pigment of Example 3) | | |
|---|---|---|
| 2θ | d relative | intensity |
| 6.14 | 14.39 | vs |
| 9.98 | 8.85 | m |
| 11.74 | 7.53 | m |
| 15.43 | 5.74 | m |
| 18.41 | 4.82 | w |
| 20.05 | 4.43 | mw |
| 20.96 | 4.24 | vw |
| 21.84* | 4.07 | vvw |
| 22.47 | 3.95 | w |
| 22.65* | 3.92 | vw |
| 23.13* | 3.84 | m |
| 23.26 | 3.82 | ms |
| 23.60 | 3.77 | w |
| 24.63 | 3.61 | vvw |
| 25.41 | 3.50 | vvw |
| 25.82* | 3.45 | w |
| 26.63 | 3.35 | s |
| 27.35 | 3.26 | vw |
| 27.73* | 3.21 | w |
| 29.17 | 3.06 | w |
| 30.26 | 2.95 | m |
| 30.92 | 2.89 | s |
| 31.40* | 2.85 | vw |
| 31.96 | 2.80 | m |
| 32.58 | 2.75 | vw |
| 33.57 | 2.67 | m |
| 34.14 | 2.62 | w |
| 35.09 | 2.56 | vw |
| 37.05 | 2.42 | vw |
| 37.31 | 2.41 | w |
| 37.96* | 2.37 | vvw |
| 38.70* | 2.32 | vvw |
| 39.34* | 2.29 | vvw |
| 39.90 | 2.26 | vvw |

| | | |
|---|---|---|
| * lines due to impurity | | |
| vs: very strong, s: strong, ms: medium strong, m: medium, mw: medium weak, w: weak, vw: very weak, vvw: very very weak, | | |

**Table 5**

| (Pigment of Example 6) | | |
|---|---|---|
| 2θ | d | relative intensity |
| 7.13 | 12.39 | w |
| 10.13 | 8.73 | w |
| 12.38 | 7.15 | m |
| 16.04 | 5.52 | vvw |
| 20.31 | 4.37 | w |
| 21.20 | 4.19 | vvw |
| 21.55 | 4.12 | s |
| 23.06 | 3.85 | mw |
| 23.87 | 3.72 | vs |
| 25.83 | 3.45 | w |
| 26.96 | 3.30 | s |
| 27.71* | 3.22 | w |
| 28.95* | 3.08 | vvw |
| 29.79 | 3.00 | vs |
| 30.68 | 2.91 | vw |
| 32.37 | 2.76 | vw |
| 34.00 | 2.63 | m |
| 35.58 | 2.52 | vvw |
| 36.34 | 2.47 | w |
| 37.82 | 2.38 | w |

| | | |
|---|---|---|
| * lines due to impurity | | |
| vs: very strong, s: strong, m: medium, w: weak, vw: very weak, vvw: very very weak, | | |

**Table 6**

| (Pigment of Example 7) | | |
|---|---|---|
| 2θ | d | relative intensity |
| 7.13 | 12.38 | w |
| 10.13 | 8.72 | w |
| 12.40 | 7.13 | mw |
| 15.39* | 5.75 | vw |
| 16.01 | 5.53 | w |
| 17.56 | 5.05 | vvw |
| 20.31 | 4.37 | w |
| 21.25 | 4.18 | vw |
| 21.55 | 4.12 | s |
| 21.90* | 4.06 | vw |
| 22.69* | 3.92 | vw |
| 23.04 | 3.86 | m |
| 23.88 | 3.72 | vs |
| 24.92* | 3.57 | vw |
| 25.85* | 3.44 | w |
| 26.05 | 3.42 | w |
| 26.68* | 3.34 | w |
| 27.01 | 3.30 | vs |
| 27.70* | 3.22 | w |
| 28.95 | 3.08 | vw |
| 29.85 | 2.99 | vs |
| 30.71 | 2.91 | vw |
| 31.38* | 2.85 | vw |
| 32.44 | 2.76 | vw |
| 33.27 | 2.69 | vvw |
| 34.06 | 2.63 | ms |
| 35.63 | 2.52 | vw |
| 36.39 | 2.47 | vw |

| | | |
|---|---|---|
| * lines due to impurity | | |
| vs: very strong, s: strong, ms: medium strong, m: medium, mw: medium weak, w: weak, vw: very weak, vvw: very very weak, | | |

## Claims

1. A process for preparing a synthetic zeolite pigment, comprising:
a) heating a mixture comprising crystalline aluminosilicate zeolite and sources of each of sulphur, cations and optionally a reducing agent under non-oxidising conditions at a temperature at which the zeolite substantially retains its framework structure;
b) contacting the product of step (a) with an oxidising agent in the presence of a solvent or carrier at a temperature of up to 300°C; and
c) recovering therefrom a synthetic inorganic zeolite pigment.

2. A process according to claim 1, wherein the heating temperature in step (a) is from 300 to 600°C.

3. A process according to claim 1 or 2, wherein the zeolite is selected from type A, type X and type Y zeolites.

4. A process according to any one of claims 1 to 3, wherein the source of sulphur is elemental sulphur.

5. A process according to any one of claims 1 to 4, wherein the reducing agent is a source of carbon.

6. A process according to claim 5, wherein the source of carbon, if present, is elemental carbon or a carbon containing salt.

7. A process according to claim 6 wherein the source of carbon is a carbon-containing salt which is also the source of cations.

8. A process according to any preceding claim, wherein the cations from the cation source comprise cations of an alkali metal or alkaline earth metal or a mixture thereof.

9. A process according to any preceding claim, wherein the cations from the cation source comprise cations of one or more transition or main group elements.

10. A process according to claim 9, wherein the cations from the cation source comprise cations of one or more heavy metals.

11. A process according to any preceding claim, wherein the cations are incorporated in the zeolite starting material, whereby the zeolite constitutes the source of cations.

12. A process according to any one of claims 1 to 10, wherein the cations are incorporated in one or more of the reducing agent (if present) and sulphur source or are provided in elemental form in the starting mixture.

13. A process according to any preceding claim, wherein in step (a) the mixture of starting materials is heated at a temperature of from 350 to 550°C.

14. A process according to any preceding claim, wherein the starting zeolite has an average particle size of less than 10 microns.

15. A process according to any preceding claim, wherein in step (b) the solvent/carrier is water.

16. A process according to any preceding claim, wherein in step (b) the oxidising agent is selected from oxygen, air, sulphur dioxide, ozone, nitrogen oxides, peroxy acids, peroxides halogen salts and mixtures thereof.

17. A process according to any preceding claim, wherein in step (b) the product is heated in the presence of the solvent or carrier at a temperature of up to 150°C.

18. A process according to any preceding claim, wherein the recovered product is subjected to an ion exchange step so as to change the colour of the synthetic zeolite pigment.

19. A process according to any one of claims 1 to 18, wherein the recovered synthetic zeolite pigment is heated in an oxidising atmosphere to effect a desired colour change of the material.

20. A modification of the process as claimed in any one of Claims 1 to 19 in which the sulphur of the sulphur source is replaced wholly or in part by selenuim or other non-metallic element.

21. A synthetic zeolite pigment having a composition expressed in moles of element or oxide per mole of alumina based on the anhydrous basis as follows:
M_{(x/n)}(A10₂)ₓ(SiO₂)_{y}M'_{(z/n'w)}.zS
wherein: S is sulphur or is replaced wholly or in part by selenuim or other non-metallic element; each of M and M' is a cation; n and n' are the respective valences of M and M'; y/x is at least 0.7; w is from 0.6 to 6; and z is from 0.8 to 8, which has an x-ray powder diffraction pattern substantially as shown in any one of Tables 2 to 6 herein.

22. A synthetic zeolite pigment according to claim 21, wherein in the formula each of n and n' independently has a value of from 1 to 5.

23. A synthetic zeolite pigment according to claim 21 or claim 22, which has a zeolite structure of any of type A, type X or type Y.

24. A synthetic zeolite pigment according to any one of claims 21 to 23, wherein either or both of the cations M comprise cations of an alkali metal or alkaline earth metal or a mixture thereof.

25. A synthetic zeolite pigment according to any one of claims 21 to 24, wherein either or both of the cations M and M' comprise cations of one or more transition or main group elements.

26. A synthetic zeolite pigment according to claim 25, wherein either or both of the cations M and M' comprise cations of one or more heavy metals.

27. A synthetic zeolite pigment according to any one of claims 21 to 26, which has an average particle size of less than 10 microns.

28. A synthetic zeolite pigment according to any one of claims 21 to 28, which has an ion exchange capability as measured by calcium ion uptake of greater than 10 mg Ca per gram of pigment (at 80°C).

29. A synthetic zeolite pigment according to any one of claims 21 to 29 which has a porosity as defined by a water adsorption capability of > 1% by weight (at 24°C).

## Patentansprüche

1. Verfahren zur Herstellung eines synthetischen Zeolithpigments, das umfaßt:
a) Erwärmen einer Mischung, die kristallinen Alumosilicatzeolith und Quellen von jeweils Schwefel, Kationen und gegebenenfalls einem Reduktionsmittel umfaßt, unter nicht oxidativen Bedingungen auf eine Temperatur, bei der der Zeolith im wesentlichen seine Gerüststruktur beibehält;
b) Kontaktieren des Produkts von Stufe (a) mit einem Oxidationsmittel in der Anwesenheit eines Lösemittels oder Trägers bei einer Temperatur von bis zu 300°C; und
c) Gewinnen eines synthetischen anorganischen Zeolithpigments daraus.

2. Verfahren nach Anspruch 1, bei dem die Erwärmungstemperatur in Stufe (a) zwischen 300 und 600°C liegt.

3. Verfahren nach Anspruch 1 oder 2, bei dem der Zeolith aus Typ A-, Typ X- und Typ Y-Zeolithen ausgewählt wird.

4. Verfahren nach irgendeinem der Ansprüche 1 bis 3, bei dem die Schwefelquelle elementarer Schwefel ist.

5. Verfahren nach irgendeinem der Ansprüche 1 bis 4, bei dem das Reduktionsmittel eine Kohlenstoffquelle ist.

6. Verfahren nach dem Anspruch 5, bei dem die Kohlenstoffquelle, falls vorhanden, elementarer Kohlenstoff oder ein kohlenstoffhaltiges Salz ist.

7. Verfahren nach Anspruch 6, bei dem die Kohlenstoffquelle ein kohlenstoffhaltiges Salz ist, das auch die Kationenquelle ist.

8. Verfahren nach irgendeinem vorherigen Anspruch, bei dem die Kationen von der Kationenquelle Kationen eines Alkalimetalls oder Erdalkalimetalls oder eine Mischung aus diesen umfassen.

9. Verfahren nach irgendeinem vorherigen Anspruch, bei dem die Kationen von der Kationenquelle Kationen von einem oder mehreren Übergangs- oder Hauptgruppenelementen umfassen.

10. Verfahren nach Anspruch 9, bei dem die Kationen von der Kationenquelle Kationen von einem oder mehreren Schwermetallen umfassen.

11. Verfahren nach irgendeinem vorherigen Anspruch, bei dem die Kationen in das Zeolithausgangsmaterial eingebaut sind, wodurch der Zeolith die Kationenquelle bildet.

12. Verfahren nach irgendeinem der Ansprüche 1 bis 10, bei dem die Kationen in eines oder mehrere der Reduktionsmittel (falls vorhanden) und der Schwefelquelle inkorporiert sind, oder in elementarer Form in der Ausgangsmischung bereitgestellt werden.

13. Verfahren nach irgendeinem vorherigen Anspruch, bei dem in Stufe (a) die Mischung der Ausgangsmaterialien auf eine Temperatur von 350 bis 550°C erwärmt wird.

14. Verfahren nach irgendeinem vorherigen Anspruch, bei dem der Ausgangszeolith eine durchschnittliche Teilchengröße von weniger als 10 µm aufweist.

15. Verfahren nach irgendeinem vorherigen Anspruch, bei dem in Stufe (b) das Lösemittel/der Träger Wasser ist.

16. Verfahren nach irgendeinem vorherigen Anspruch, bei dem das Oxidationsmittel in Stufe (b) ausgewählt ist aus Sauerstoff, Luft, Schwefeldioxid, Ozon, Stickstoffoxiden, Peroxysäuren, Peroxiden, Halogensalzen und Mischungen davon.

17. Verfahren nach irgendeinem vorherigen Anspruch, bei dem das Produkt in Stufe (b) in der Gegenwart des Lösemitteis oder Trägers auf eine Temperatur von bis zu 150°C erwärmt wird.

18. Verfahren nach irgendeinem vorherigen Anspruch, bei dem das gewonnene Produkt einer Ionenaustauschstufe unterworfen wird, um die Farbe des synthetischen Zeolithpigments zu verändern.

19. Verfahren nach irgendeinem der Ansprüche 1 bis 18, bei dem das gewonnene synthetische Zeolithpigment in einer oxidierenden Atmosphäre erwärmt wird, um eine gewünschte Farbänderung des Materials zu bewirken.

20. Eine Modifikation des Verfahrens, das in irgendeinem der Ansprüche 1 bis 19 beansprucht wird, bei dem der Schwefel von der Schwefelquelle ganz oder teilweise durch Selen oder ein anderes nichtmetallisches Element ersetzt wird.

21. Ein synthetisches Zeolithpigment mit einer Zusammensetzung, die in Mol Element oder Oxid pro Mol Aluminiumoxid bezogen auf eine wasserfreie Basis wie folgt ausgedrückt wird:
M_{(x/n)} (Al0₂)ₓ(SiO₂)_{y}M'_{(z/n'w)}.zS
wobei: S Schwefel ist oder ganz oder teilweise durch Selen oder ein anderes nichtmetallisches Element ersetzt ist; sowohl M als auch M' ein Kation ist; n und n' die jeweiligen Wertigkeiten von M und M' sind; y/x wenigstens 0,7 beträgt; w von 0,6 bis 6 und z von 0,8 bis 8 beträgt, das ein Röntgenpulverbeugungsdiagramm aufweist, wie es im wesentlichen in irgendeiner der Tabellen 2 und 6 hierin gezeigt ist.

22. Synthetisches Zeolithpigment nach Anspruch 21, bei dem in der Formel jedes n und n' unabhängig voneinander einen Wert von zwischen 1 und 5 hat.

23. Synthetisches Zeolithpigment nach Anspruch 21 oder Anspruch 22, das eine Zeolithstruktur von irgendeinem von Typ A, Typ X oder Typ Y aufweist.

24. Synthetisches Zeolithpigment nach irgendeinem der Ansprüche 21 bis 23, bei dem entweder eines oder beide der Kationen M Kationen eines Alkalimetalls oder Erdalkalimetalls oder eine Mischung aus diesen umfassen.

25. Synthetisches Zeolithpigment nach irgendeinem der Ansprüche 21 bis 24, bei dem entweder eines oder beide der Kationen M und M' Kationen von einem oder mehreren Übergangs- oder Hauptgruppenlementen umfaßt.

26. Synthetisches Zeolithpigment nach Anspruch 25, bei dem entweder eines oder beide der Kationen M und M' Kationen von einem oder mehreren Schwermetallen umfassen.

27. Synthetisches Zeolithpigment nach irgendeinem der Ansprüche 21 bis 26, das eine Durchschnittsteilchengröße von weniger als 10 µm hat.

28. Synthetisches Zeolithpigment nach irgendeinem der Ansprüche 21 bis 28, das eine Ionenaustauschfähigkeit, gemessen als Calciumionenaufnahmevermögen, von mehr als 10 mg Calcium pro g Pigment (bei 80°C) hat.

29. Synthetisches Zeolithpigment nach irgendeinem der Ansprüche 21 bis 29, das eine Porosität, definiert als Wasseradsorptionsfähigkeit, von > 1 Gew.-% (bei 24°C) hat.

## Revendications

1. Procédé de préparation d'un pigment zéolitique synthétique comprenant :
a) le chauffage d'un mélange comprenant une zéolite cristalline d'aluminosilicate et des sources de chacun parmi le soufre, des cations et facultativement un agent réducteur dans des conditions non oxydantes à une température à laquelle la zéolite conserve en grande partie se structure de squelette;
b) la mise en contact du produit de l'étape (a) avec un agent oxydant en présence d'un solvant ou d'un support à une température allant jusqu'à 300°C, et
c) la récupération à partir de celui-ci d'un pigment zéolitique inorganique synthétique.

2. Procédé suivant la revendication 1, dans lequel la température de chauffage de l'étape (a) est comprise entre 300 et 600°C.

3. Procédé suivant la revendication 1 ou 2, dans lequel la zéolite est sélectionnée parmi les zéolites de type A, de type X et de type Y.

4. Procédé suivant l'une quelconque des revendications 1 à 3, dans lequel la source de soufre est du soufre élémentaire.

5. Procédé suivant l'une quelconque des revendications 1 à 4, dans lequel l'agent réducteur est une source de carbone.

6. Procédé suivant la revendication 5, dans lequel la source de carbone, si elle est présente, est du carbone élémentaire ou un sel contenant du carbone.

7. Procédé suivant la revendication 6, dans lequel la source de carbone est un sel contenant du carbone qui est également la source de cations.

8. Procédé suivant l'une quelconque des revendications précédentes, dans lequel les cations de la source de cation comprennent des cations d'un métal alcalin ou d'un métal alcalino-terreux ou un mélange de ceux-ci.

9. Procédé suivant l'une quelconque des revendications précédentes, dans lequel les cations de la source de cation comprennent des cations d'un ou de plusieurs éléments de transition ou du groupe principal.

10. Procédé suivant la revendication 9, dans lequel les cations de la source de cation comprennent des cations d'un ou de plusieurs métaux lourds.

11. Procédé suivant l'une quelconque des revendications précédentes, dans lequel les cations sont incorporés dans le matériau de départ zéolitique, la zéolite constituant la source de cations.

12. Procédé suivant l'une quelconque des revendications 1 à 10, dans lequel les cations sont incorporés dans un ou plusieurs parmi l'agent réducteur (s'il est présent) et la source de soufre, ou sont fournis sous une forme élémentaire dans le mélange de départ.

13. Procédé suivant l'une quelconque des revendications précédentes, dans lequel, lors de l'étape (a), le mélange de matériaux de départ est chauffé à une température comprise entre 350 et 550°C.

14. Procédé suivant l'une quelconque des revendications précédentes, dans lequel la zéolite de départ présente une taille particulaire moyenne inférieure à 10 microns.

15. Procédé suivant l'une quelconque des revendications précédentes, dans lequel, lors de l'étape (b), le solvant/support est de l'eau.

16. Procédé suivant l'une quelconque des revendications précédentes, dans lequel, lors de l'étape (b), l'agent oxydant est sélectionné parmi l'oxygène, l'air, le dioxyde de soufre, l'ozone, les oxydes d'azote, les acides peroxydés, les peroxydes, les sels halogénés et des mélanges de ceux-ci.

17. Procédé suivant l'une quelconque des revendications précédentes, dans lequel, lors de l'étape (b), le produit est chauffé en présence du solvant ou du support à une température allant jusqu'à 150°C.

18. Procédé suivant l'une quelconque des revendications précédentes, dans lequel le produit récupéré est soumis à une étape d'échange d'ions de façon à changer la couleur du pigment zéolitique synthétique.

19. Procédé suivant l'une quelconque des revendications 1 à 18, dans lequel le pigment zéolitique synthétique récupéré est chauffé sous une atmosphère oxydante pour obtenir un changement de couleur souhaité du matériau.

20. Modification du procédé suivant l'une quelconque des revendications 1 à 19, dans laquelle le soufre de la source de soufre est remplacé entièrement ou en partie par du sélénium ou un autre élément non métallique.

21. Pigment zéolitique synthétique présentant une composition exprimée en moles d'élément ou en oxyde par mole d'alumine fondée sur la base anhydre comme suit :
M_{(x/n)}(AlO₂)ₓ(SiO₂)_{y}M'_{(z/n'w)}.zS
dans laquelle : S est du soufre ou est remplacé entièrement ou en partie par du sélénium ou un autre élément non métallique; chacun de M et M' est un cation; n et n' sont les valences respectives de M et M'; y/x est au moins 0,7; w est compris entre 0,6 et 6; et z est compris entre 0,8 et 8, qui a un diagramme de diffraction de rayons X de poudre en grande partie comme présenté dans l'un quelconque des tableau II à VI dans le présent mémoire.

22. Pigment zéolitique synthétique suivant la revendication 21, dans lequel, dans la formule, chacun de n et n' a de manière indépendante une valeur comprise entre 1 et 5.

23. Pigment zéolitique synthétique suivant l'une quelconque des revendications 21 ou 22, qui a une structure zéolitique de l'un quelconque des type A, type X ou type Y.

24. Pigment zéolitique synthétique suivant l'une quelconque des revendications 21 à 23, dans lequel l'un ou l'autre ou les deux cations M et M' comprennent des cations d'un métal alcalin ou d'un métal alcalinoterreux ou d'un mélange de ceux-ci.

25. Pigment zéolitique synthétique suivant l'une quelconque des revendications 21 à 24, dans lequel l'un ou l'autre ou les deux cations M et M' comprennent des cations d'un ou plusieurs éléments de transition ou du groupe principal.

26. Pigment zéolitique synthétique suivant la revendication 25, dans lequel l'un ou l'autre ou les deux cations M et M' comprennent des cations d'un ou de plusieurs métaux lourds.

27. Pigment zéolitique synthétique suivant l'une quelconque des revendications 21 à 26, qui a une taille particulaire moyenne inférieure à 10 microns.

28. Pigment zéolitique synthétique suivant l'une quelconque des revendications 21 à 27, qui a une capacité d'échange d'ions comme mesurée par une absorption d'ion calcium supérieure à 10 mg de Ca/g de pigment (à 80°C).

29. Pigment zéolitique synthétique suivant l'une quelconque des revendications 21 à 28, qui a une porosité comme définie par une capacité d'adsorption d'eau supérieure à 1% en poids (à 24°C).
